**Europäisches Patentamt**

(19) **European Patent Office**

**Office européen des brevets**

(11) Veröffentlichungsnummer: **0 035 653**

**A2**

(12) # EUROPÄISCHE PATENTANMELDUNG

(21) Anmeldenummer: **81100867.1**

(22) Anmeldetag: **07.02.81**

(51) Int. Cl.³: **C 08 B 11/00**
**C 08 B 17/06**

(30) Priorität: **15.02.80 DE 3005700**

(43) Veröffentlichungstag der Anmeldung:
**16.09.81 Patentblatt 81/37**

(84) Benannte Vertragsstaaten:
**AT BE CH DE FR GB IT LI LU NL SE**

(71) Anmelder: **Henkel Kommanditgesellschaft auf Aktien**
**-Patentabteilung- Postfach 1100 Henkelstrasse 67**
**D-4000 Düsseldorf 1(DE)**

(72) Erfinder: **Wüst, Willi, Dr.**
**Fasanenring 32**
**D-4030 Ratingen-Hösel(DE)**

(72) Erfinder: **Leischner, Hasso**
**Böcklinstrasse 10**
**D-4000 Düsseldorf 1(DE)**

(72) Erfinder: **Carduck, Franz-Josef, Dr.**
**Landstrasse 18**
**D-5657 Haan(DE)**

(72) Erfinder: **Rähse, Wilfried, Dr.**
**Kohlhagenstrasse 44**
**D-4000 Düsseldorf 13(DE)**

(72) Erfinder: **Kühne, Norbert**
**Feuerbachstrasse 9**
**D-5657 Haan(DE)**

(54) **Verfahren zur kontinuierlichen Herstellung von Celluloseethern.**

(57) Die kontinuierliche Herstellung von Celluloseethern durch Umsetzen von Alkalicellulose mit Alkylhalogenid und/oder Alkylenoxiden und/oder Halogencarbonsäuresalzen erfolgt in inerten Flüssigkeiten in einem Rohrreaktor, der ein l/d-Verhältnis von etwa 500 bis 20 000 aufweist und dessen Länge l nicht unter 50 m, vorzugsweise nicht unter 100 m, liegt. Die Suspension wird durch den Rohrreaktor unter den Bedingungen stark turbulenter Strömung mit einer Strömungsgeschwindigkeit von mindestens 20 cm/s geführt. Die Verweilzeit beträgt 2 bis 10 Minuten, vorzugsweise 4 bis 6 Minuten. Die restliche vollständige Umsetzung wird in einer nachgeschalteten, mehrstufigen Rührkolonne oder einem Rührkessel vorgenommen.

EP 0 035 653 A2

./...

P a t e n t a n m e l d u n g

D 5754 EP

"Verfahren zur kontinuierlichen Herstellung von
Celluloseethern"

---

Gegenstand des vorliegenden Verfahrens ist die kontinuierliche Herstellung von Celluloseethern durch Umsetzen von Alkalicellulose mit einem oder mehreren Veretherungsmitteln.

Die Herstellung von wasserlöslichen Celluloseethern durch Umsetzen von Halogenalkylen, Halogencarbonsäuresalzen beziehungsweise Alkylenoxiden mit Alkalicellulose ist seit langem bekannt. Die Umsetzung kann sowohl batchweise als auch kontinuierlich erfolgen. Bei kontinuierlicher Arbeitsweise bereiten die Wärmeabführung und eine gleichmäßige Durchmischung der Reaktionsmischung zwecks Vermeidung örtlicher Überhitzung Probleme. Werden sie nicht optimal gelöst, müssen die Vorteile einer kontinuierlichen Arbeitsweise durch mangelnde Produktqualität erkauft werden.

In der DE-AS 15 43 136 wird ein kontinuierliches Verfahren beschrieben, bei dem die Reaktion in einem mit einer Förderschnecke versehenen Rohr erfolgt. Die Wärmeabfuhr gelingt zum einen über einen Kühlmantel, der das Rohr umgibt, und zum anderen über die Verdampfung von Methylchlorid, das im 5- bis 10fachen Überschuß vorliegt. Die Reaktionstemperaturen betragen 70 bis 95° C, wobei sich infolge des hohen Methylchloridüberschusses ein

/2

0035653
HENKEL KGaA
ZR-FE/Patente

Druck von circa 26 bar einstellt.

In einem anderen Verfahren, beschrieben in der DE-OS 26 36 935, soll die Umsetzung annähernd kontinuierlich bei etwa gleichen Druck- und Temperaturverhältnissen in einem Rohrreaktor erfolgen. Als Vorteil wird besonders auf die günstige Wärmeabfuhr hingewiesen. Bei der Durchrechnung der Beispiele zeigt sich allerdings, daß der Rohrreaktor im streng laminaren Bereich betrieben wird, wo infolge der ruhenden Grenzschichten niedrige Wärmedurchgangszahlen und damit eine schlechte Wärmeabfuhr resultieren. Weiterhin errechnen sich Strömungsgeschwindigkeiten, die deutlich unter der Sedimentationsgeschwindigkeit liegen, so daß eine technisch vernünftige Förderung der Suspension in Frage gestellt werden muß.

In der vorliegenden Erfindung war die Aufgabe gestellt, ein voll kontinuierliches Verfahren zu entwickeln, das es erlaubt, unter reaktionstechnisch optimalen Bedingungen gute Produkte herzustellen. Die Lösung der Aufgabe gelang mit den Maßnahmen gemäß Ansprüchen.

Zur kontinuierlichen Förderung der Ausgangs- und Endprodukte sollten diese feinkörnig in Form einer Suspension vorliegen. Als Suspensionsmittel empfahlen sich inerte Flüssigkeiten wie Toluol oder ein ähnlicher Kohlenwasserstoff. Der Zusatz niederer Monoalkohole mit 1 bis 5 Kohlenstoffatomen kann vorteilhaft sein. Die Strömungsgeschwindigkeit der suspendierten Pulvercellulose muß wegen der raschen Sedimentation über 20 cm/s, vorzugsweise über 40 cm/s, liegen. Nach dieser Forderung wurden die Rohrleitungsdimensionen festgelegt.

An den Reaktor sind die folgenden Anforderungen gestellt worden: Zu Beginn der Reaktion große Wärmeaustauschfläche und keine Durchmischung, hohe k-Zahlen und eine Verweilzeit von 30 min bis zu 1 Stunde. Diesen Anforderungen genügt ein Reaktorsystem, bestehend aus einer Kombination/3 von Rohrreaktor und Kammerreaktor (siehe Abbildung), in
optimaler Weise. Im Rohrreaktor, der im Gegensatz zur
DE-OS 26 36 935 im turbulenten Bereich betrieben wird,
um von der hohen k-Zahl und von der Kolbenströmung in diesem System zu profitieren, wird bei einem hohen Verhältnis der Wärmeaustauschfläche zum Volumen eine optimale Wärmeabfuhr erreicht. Wegen der kontinuierlichen Reaktionsführung bleiben diese Verhältnisse auch immer konstant,
das heißt die Strömungsgeschwindigkeit von circa 50 cm/s
bleibt stets erhalten. Ein Rohrreaktor, der diese Anforderungen erfüllt, muß ein hohes l/d-Verhältnis aufweisen, wobei etwa 500 einen unteren Grenzwert und etwa
20 000 wegen des Druckabfalls einen oberen Grenzwert darstellen. Vorzugsweise sollte das l/d-Verhältnis etwa
5 000 bis 10 000 betragen.

Nach einer NaOH-Umsetzung von etwa 10 bis 70 %, vorzugsweise 20 bis 50 %, kann auf die sehr engbandige Verweilzeitverteilung des Rohrreaktors, das heißt praktisch
keine Rückvermischung, und auf die optimale Wärmeabfuhr
verzichtet werden. Die Restumsetzung wird vorzugsweise
in einem Kammerreaktor, der verschiedene Temperaturzonen
aufweist, durchgeführt. Sie kann aber auch in anderen
Systemen, beispielsweise einem kontinuierlich arbeitenden
Rührkessel, fortgesetzt werden.

Der Kammerreaktor ist eine in Kammern unterteilte Rührkolonne, wobei jede Kammer ein Rührelement enthält.
Die Rührbedingungen müssen so gewählt werden, daß zum
einen der Feststoff nicht sedimentieren kann und daß
zum anderen infolge der gesteigerten Suspensionsbewegung
hohe k-Zahlen und damit eine gute Wärmeabfuhr erreicht
werden, das heißt ebenfalls turbulente Bedingungen vorliegen. Bewährt haben sich Kolonnen mit 5 bis 40 Kammern,
vorzugsweise mit 10 bis 25 Kammern, die auf Grund der
Konstruktion der Trennböden zwischen den Kammern eine

/4

Rückvermischung weitgehend verhindern und die wegen der
größeren Wärmeabfuhr schlank geschnitten sein müssen,
das heißt 1/d-Verhältnisse von mindestens 5, vorzugsweise
8 bis 15, aufweisen sollten.

Von weiterem besonderem Vorteil für das erfindungsgemäße
Verfahren ist der niedrige Betriebsdruck von circa 4 bis
10 bar, der durch ein nahezu äquimolares Einsatzmolverhältnis zwischen Methylchlorid und Natronlauge erreicht
wird und dadurch eine sehr kostengünstige technische Ausführung der Anlage erlaubt.

Zweckmäßigerweise setzt man für das erfindungsgemäße Verfahren eine pulverförmige Cellulose ein, die einen mittleren Korndurchmesser zwischen 20 und 120 μm, vorzugsweise zwischen 40 und 60 μm, aufweist. Verschiedenartige
Pulvercellulosen aus Buche, Fichte oder Linters mit DP-
Werten von etwa 300 bis 1 800 gelangten zum Einsatz.
Je höher der DP-Wert liegt, umso höher ist die Viskosität
einer wäßrigen Lösung des aus dieser Cellulose hergestellten Ethers. Bei entsprechender Dimensionierung des Rohrreaktors kann natürlich auch eine andere Celluloseform
gewählt werden.

Die zur Alkalisierung verwendete Natronlauge sollte möglichst konzentriert sein und einen Gehalt an Natriumhydroxid von etwa 40 bis 70 % aufweisen. Bei Mitverwendung
von niederen Monoalkoholen mit 1 bis 5 Kohlenstoffatomen
als Alkalisierungshilfsmittel kann der Wassergehalt
auch noch weiter abgesenkt werden. Es hat sich hier der
Einsatz von Methanol bewährt, das aber vor der eigentlichen Veretherung zumindest partiell abdestilliert wird.
Es ist allerdings erforderlich, so viel Verdünnungsflüssigkeit (Alkohol, inerte Flüssigkeit) vorliegen zu
haben, daß die Mischung rührfähig beziehungsweise pumpfähig ist. Die kontinuierliche Herstellung der Alkali-

/5

0035653
HENKEL KGaA
ZR-FE/Patente

cellulose unter den vorgenannten Bedingungen stellt eine bevorzugte Ausführungsform dar.

Ferner wird zweckmäßig die gesamte Reaktion, das heißt sowohl die Alkalisierung als auch die Veretherung, in inerten Flüssigkeiten durchgeführt. Dies ist insbesondere für eine gleichmäßige Durchführung der Reaktion, das heißt für hohe Produktqualitäten, sehr günstig. Als inerte Flüssigkeiten eignen sich Kohlenwasserstoffe wie Aliphaten mit 6 bis 12 Kohlenstoffatomen, insbesondere aber Aromaten, wie Toluol oder auch Xylol. Auch ist die Verwendung von Ethern wie Dimethylether, Dipropylether, Dioxan oder Ketonen und sekundären oder tertiären Alkoholen möglich. Derartige inerte Lösungs- oder Verdünnungsmittel sind an sich für die Herstellung wasserlöslicher Celluloseether bekannt, werden hier aber zusätzlich als Transporthilfsmittel (Suspendiermittel) verwendet, um den Prozeß voll kontinuierlich über alle Stufen ablaufen lassen zu können.

Nachdem die Alkalisierung durchgeführt ist, erfolgt die Veretherung bei der für die eingesetzten Reaktanden spezifischen Temperatur. Als Alkylierungsmittel kommen in Frage Halogenalkyle, wie Chlormethyl, Chlorethyl, Bromethyl, Allylbromid, Brom- und Chloressigsäure beziehungsweise deren Alkalisalz, gegebenenfalls auch Dichloressigsäure, weiter Alkylenoxide, wie Ethylen- oder Propylenoxid sowie Butylenoxid beziehungsweise Gemische der genannten Verbindungen. Es ist natürlich auch möglich, verschiedene Alkylierungsmittel nacheinander anzuwenden, gegebenenfalls nach erneuter Alkalisierung.

Schließlich hat es sich als besonders günstig erwiesen, alle Verfahrensschritte in kontinuierlicher Weise durchzuführen. Die Kontinuität der Fahrweise, insbesondere

/6

0035653

in den ersten Verfahrensschritten, und die dadurch bedingte gleichmäßige Alkalisierung und Alkylierung beziehungsweise Hydroxyalkylierung wirkt sich in vieler Hinsicht
günstig auf die hergestellten Produkte aus. Wasserlösliche
Celluloseether, nach dem erfindungsgemäßen Verfahren hergestellt, bilden meist faserstofffreie beziehungsweise
sehr faserstoffarme und schnellösliche Produkte.

Im folgenden ist die erfindungsgemäße Herstellung von
wasserlöslichen Celluloseethern im einzelnen an Hand der
beiliegenden Abbildung beschrieben.

Die pulverförmige Cellulose 1 mit beispielsweise einem
mittleren Korndurchmesser von 40 bis 60 $\mu$m und einem
DP-Wert von etwa 1 200 bis 1 400 wird aus einem Silo über
eine Dosierbandwaage 2 gefördert und in einen kontinuierlichen Toluolstrom 5 eingeschleust und dort suspendiert 3.

Dabei sollte sichergestellt sein, daß das gewünschte
Verhältnis von Cellulose zu Toluol (im nachfolgenden als
Flottenverhältnis bezeichnet) im Bereich zwischen etwa
1 : 8 bis 1 : 15 liegt, wobei aus praktischen Gründen
Werte zwischen 1 : 11 und 1 : 13 bevorzugt sind.

Die Alkalisierung der suspendierten Cellulose selbst erfolgt zweckmäßig in einem Schlaufenreaktor, wobei die
mittlere Verweilzeit etwa bei 10 bis 20 sec. liegt.
Zur Suspension der Cellulose in Toluol wird eine 50
gewichtsprozentige Natronlauge 7 gegeben, die hier durch
einen Zusatz von Methanol auf 30 bis 40 % 
verdünnt worden ist. Natürlich erfolgt die Einspeisung
dieser Alkalisierungslauge kontinuierlich, da auch die
Suspension von Alkalicellulose kontinuierlich abgezogen
wird. Nach dem Verlassen der Alkalisierungsstufe mit
Temperaturen zwischen etwa 30° und 50° C hat die Alkalicellulose ihr maximales Quellvolumen erreicht. Die in Toluol suspendierte Alkalicellulose fließt dann kontinuierlich zur Weiterverarbeitung in einen Rührwerksbehälter 8 über. Hier erfolgt die Abtrennung eines Teils des Wassers aus der Lauge und des Methanols (9, 10), wobei der Wassergehalt auf das Molverhältnis von 3,5 bis 5,0 Mol $H_2O$ pro Anhydroglucoseeinheit abgesenkt wird. Die Abtrennung des überschüssigen Wassers kann zusammen mit Methanol, zum Beispiel bei Temperaturen zwischen etwa $30^{\circ}$ und $80^{\circ}$ C erfolgen, wobei der Druck etwa 100 Torr bis Normaldruck betragen sollte.

Durch diese Maßnahmen wird gleichzeitig etwa vorhandener Sauerstoff abgetrennt. Das abgetrennte Kondensat ist zweiphasig und besteht aus einer wäßrig-methanolischen Phase und einer Toluol-Phase. Diese Toluol-Phase kann bei dem kontinuierlichen Verfahren direkt wieder eingesetzt beziehungsweise zurückgeführt werden, während die andere Phase aufgearbeitet werden muß.

Die so vorbereitete Alkalicellulose wird dann der Veretherung mit Methylchlorid und Alkylenoxid zugeleitet. Diese Veretherung kann in an sich bekannter Weise vorgenommen werden. Es hat sich herausgestellt, daß auf eingesetztes NaOH erfindungsgemäß nur 10 bis 50 Gewichtsprozent, bevorzugt aber nur 20 bis 30 Gewichtsprozent eines Überschusses an Methylchlorid verwendet werden muß.

Das mit Alkylierungsmitteln vorgesehene Suspensionsgemisch aus Alkalicellulose in Toluol wird dann möglichst schnell auf Reaktionstemperaturen gebracht. Bei etwa $94^{\circ}$ bis $98^{\circ}$ C springt die Reaktion im allgemeinen sofort an und wird dann bei dieser oder leicht erhöhter Temperatur bis etwa $110^{\circ}$ C im Rohrreaktor 15 weitergeführt.

Das Längendurchmesser-Verhältnis des Rohrreaktors sollte

/8

oberhalb von 500, vorzugsweise zwischen 5 000 und 10 000,
liegen. Der Rohrreaktor stellt ein Doppelmantelrohr dar,
dessen wirksames Reaktionsinnenrohr nicht unter 50 m,
vorzugsweise nicht unter 100 m, lang sein sollte. Auch erheblich längere Rohre sind verwendbar. Die Thermostatisierung wird mit einem den Mantel durchfließenden Heiz/-
Kühl-Kreislauf ($H_2O$) bewirkt. Separate Temperaturzonen können am Rohrreaktor leicht verwirklicht werden.

Die Umsetzung im Rohrreaktor wird während einer Verweilzeit von 2 bis 10 Minuten, vorzugsweise 4 bis 6 Minuten,
bei praktisch konstanter Temperatur unter stark turbulenter Strömung durchgeführt. Anschließend kann eine restliche, vollständige Umsetzung, beispielsweise in einer
Rührkolonne 14, vorgenommen werden. Bei entsprechender
Dimensionierung des Rohrreaktors kann selbstverständlich
auch die gesamte Reaktion im Rohrreaktor durchgeführt
werden. Die Strömungsgeschwindigkeit im Rohrreaktor sollte
so hoch sein, daß eine starke turbulente Strömung vorherrscht, bei der praktisch keine Rückvermischung eintritt.
Das bedeutet, daß ein ganz enges Verweilzeitspektrum
erzielt wird. Außerdem ist so gewährleistet, daß eine
völlig konstante Temperatur innerhalb eines betrachteten
Rohrquerschnitts herrscht.

Im sogenannten Einzugsteil des Rohrreaktors wird die Reaktionsmischung auf die Temperatur gebracht, bei der die
Alkylierung stattfindet. Diese liegt beispielsweise
bei Verwendung von Methylchlorid etwa zwischen $94^\circ$ und
$98^\circ$ C. In diesem Temperaturbereich springt die Methylierungsreaktion sicher an. Im allgemeinen ist bereits bei
einer Verweilzeit von 4 bis 6 Minuten, selbstverständlich
in Abhängigkeit von der Durchsatzmenge, ein erheblicher
Umsatz vonstatten gegangen. Er soll etwa zwischen 20 und
50 % liegen.

Bei Einsatz einer Rührkolonne kann die Reaktionstemperatur langsam bis auf 135° C erhöht werden. Dabei wird auch hier die eingesetzte NaOH praktisch quantitativ verbraucht, so daß es nicht notwendig ist, später bei der Aufarbeitung größere Mengen an Säure zur Neutralisation zu verwenden.

Die Aufarbeitung des Reaktionsgemisches erfolgt in an sich bekannter Weise. Durch Herabsetzen des Drucks wird zunächst niedrigsiedendes Alkylierungsmittel, zum Beispiel Methylchlorid, und Ether, wie Dimethylether sowie Methanol abgetrennt 18. Es bleibt eine Suspension des Celluloseethers in Toluol zurück. Diese Suspension wird gegebenenfalls neutralisiert und das Toluol anschließend von der Methylcellulose abgetrennt 17.

Die eigentliche Aufarbeitung des gebildeten Celluloseethers erfolgt durch Auswaschen beziehungsweise Extraktion von Salzen, insbesondere von Natriumchlorid. Man kann so Hydroxyalkylcellulosen erhalten, die eine Restfeuchte von etwa 35 bis 50 Gewichtsprozent aufweisen. Der Gehalt an Salzen, insbesondere Natriumchlorid, kann ohne weiteres unter 0,5 %, bezogen auf trockene Cellulose, gesenkt werden. In der Regel ist es aber nicht erforderlich, den Kochsalzgehalt so weit abzusenken. Auch kann man eine gewisse Restfeuchte für verschiedene Verwendungszwecke in Kauf nehmen.

Die auf diese Art und Weise herstellbaren Celluloseether, insbesondere die Methylcellulose und die Hydroxyethylmethylcellulose, liegen direkt als Feinstaub vor und zeigen in Abhängigkeit von der eingesetzten Cellulose in 2 %iger wäßriger Lösung eine Viskosität von maximal 25 000 mPas.

Die Veretherungsmittel können in Abhängigkeit von der geforderten Produktqualität an verschiedenen Stellen des Reaktorsystems zudosiert werden. So ist beispielsweise auch eine Zugabe an zwei oder mehreren Orten möglich. Für die Herstellung von Hydroxyalkylcellulose empfiehlt sich eine stufenweise Alkalisierung der Cellulose, die an unterschiedlichen Stellen des Rohrreaktors und/oder der Rührkolonne vorgenommen wird.

Im nachfolgenden wird das beanspruchte Verfahren beispielhaft für die Herstellung von Hydroxyethylmethylcellulose beschrieben.

/11

0035653

## B e i s p i e l

39,5 kg Pulvercellulose (atro) wurden pro Stunde über eine Dosierbandwaage in einen mit Stickstoff überlagerten Mischkessel gegeben. Die gemahlene Cellulose wies einen DP-Wert von 1 300 bei einem statistischen Mittelkorn von 50 $\mu$m auf. Gekoppelt an die Geschwindigkeit der Dosierbandwaage wurde die eingestellte Menge Toluol zudosiert. Das Gewichtsverhältnis Cellulose/Toluol betrug 1 : 12. Etwa 600 1 Cellulose-Toluol-Suspension wurden dem Mischkessel pro Stunde über eine Dosierpumpe entnommen und mit 41 1 50 %iger Natronlauge und 24 1 Methanol alkalisiert. Die Alkalisierungstemperatur betrug etwa 40 bis 45° C.

Die so erhaltene Suspension gelangte in einen Kessel, in dem durch ein Vakuum von 400 bis 500 Torr bei 50 bis 60° C 100 1 Flüssigkeit verdampft wurden. Dabei konnte der von der Pulvercellulose ins System eingebrachte Sauerstoff weitgehend entfernt werden. Durch die gleichzeitige Entnahme des Destillats, bestehend aus 2/3 Toluol und 1/3 Methanol/Wasser, trat eine Erhöhung der Alkalikonzentration ein.

Direkt hinter der Dosierpumpe, die die Alkalicellulose-Toluol-Suspension gegen den Systemdruck in den Rohrreaktor förderte, wurde jeweils über Dosierpumpen Methylchlorid und Ethylenoxid in flüssiger Form in die Suspension eingedrückt. Die eingesetzte Methylchloridmenge lag etwa 20 % über der molaren NaOH-Menge. Das Molverhältnis Ethylenoxid/Anhydroglucoseeinheit betrug etwa 0,12.

Nach Aufheizen der Suspension auf circa 80° C gelangte das Methylierungsgemisch in einen 140 m langen, thermostatisierten Rohrreaktor (V = 46 1). Bei Temperaturen

/ 12

im Rohrreaktor von circa 94 bis 98° C wurden Umsätze von etwa 50 % erzielt. Die Reaktion ist dann in einer 17-stufigen Rührkolonne bis zu Umsätzen von etwa 97,5 bis 99 % fortgeführt worden.

Durch den vorgeschalteten Rohrreaktor ließ sich zu Beginn der Reaktion die entstehende Reaktionswärme optimal abführen und insbesondere die Rückvermischung weitgehend vermeiden. Unter Entspannung auf Normaldruck wurde die Methylcellulose-Toluol-Suspension bei 80° C in einen Behälter geflasht. Nicht umgesetztes Methylchlorid und gebildeter Dimethylether verdampften hierbei. Sie wurden in einer separaten Stufe in bekannter Weise abgetrennt. Das teilweise gleichfalls verdampfte Toluol wurde kondensiert und gemeinsam mit dem Destillat der Entgasungs-/Entwässerungsstufe aufgearbeitet. Methanol ist durch Rektifikation zurückgewonnen worden.

Über einen Filtriervorgang wurde die Abtrennung des Toluols vorgenommen.

Nach zwei Waschgängen, wobei das zweite Waschwasser zurückgeführt wurde und als erstes Waschwasser diente, lag der Salzgehalt zwischen 0,03 und 3 %. Die benötigten Mengen an Heißwasser betrugen nur das 3- bis 8fache des Cellulosegewichtes. Im Anschluß an die Trocknung lag das Produkt in verkaufsfähiger Form vor.

Die so hergestellten Feinstäube wiesen maximale Viskositätswerte, gemessen mit dem Brookfield-Viskosimeter in 2 %iger Lösung, von 25 000 mPas auf. Die Trübungszahlen lagen um 40 %. Die Produkte zeigten bei der Bestimmung der Wasserretention Spitzenwerte. Die Kornverteilung wies ohne Nachmahlung meist weniger als 10 % der Teilchen größer als 125 µm auf.

/13

0035653

HENKEL KGaA
ZR-FE/Patente

## Erklärung zur Zeichnung

1) Cellulosebunker
2) Dosierbandwaage
3) Anmaischkessel
4) Toluolbehälter
5) Pumpe
6) Dosierpumpe
7) Natronlaugen-Zugabe
8) Rührwerksbehälter für die Entgasung/Entwässerung
9) Kühler
10) Rücklaufregelung
11) Pumpe
12) Ethylenoxid-Methylchlorid-Zugabe
13) Aufheizstrecke und Rohrreaktor
14) Rührkolonne
15) Propylenoxid-Zugabe
16) Druckreduktion
17) Abtrennung von Toluol und Auswaschen des Celluloseethers
18) Abtrennung der gasförmigen Bestandteile

"Verfahren zur kontinuierlichen Herstellung von Celluloseethern"

---

<u>Patentansprüche:</u>

1. Verfahren zur kontinuierlichen Herstellung von Celluloseethern durch Umsetzen von Alkalicellulose mit Alkylhalogenid und/oder Alkylenoxiden und/oder Halogencarbonsäuresalzen, dadurch gekennzeichnet, daß die Umsetzung in inerten Flüssigkeiten in einem Rohrreaktor vorgenommen wird, der ein l/d-Verhältnis von etwa 500 bis 20 000 aufweist und dessen Länge l nicht unter 50 m, vorzugsweise nicht unter 100 m, liegt, wobei die Suspension durch den Rohrreaktor unter den Bedingungen stark turbulenter Strömung mit einer Strömungsgeschwindigkeit von mindestens 20 cm/s geführt wird.

2. Verfahren nach Anspruch 1, dadurch gekennzeichnet, daß die Reaktion in dem Rohrreaktor während einer Verweilzeit von 2 bis 10 Minuten, vorzugsweise 4 bis 6 Minuten, begonnen und die restliche vollständige Umsetzung in einer nachgeschalteten, mehrstufigen Rührkolonne oder einem Rührkessel vorgenommen wird.

3. Verfahren nach den Ansprüchen 1 und 2, dadurch gekennzeichnet, daß die Rührkolonne in 5 bis 40 Kammern, vorzugsweise 10 bis 25 Kammern, unterteilt ist, wobei jede durch ein Rührelement gerührt wird und das l/d-Verhältnis der Kolonne mindestens 5, vorzugsweise 8 bis 15, beträgt.

4. Verfahren nach den Ansprüchen 1 bis 3, dadurch gekennzeichnet, daß man zur Herstellung der Alkalicellulose Pulvercellulose einsetzt, die einen mittleren Korndurchmesser zwischen 20 und 120 $\mu$m, vorzugsweise zwischen 40 und 60 $\mu$m, aufweist.

/ 16

0035653

5. Verfahren nach den Ansprüchen 1 bis 4, dadurch gekennzeichnet, daß die Alkalicellulose kontinuierlich
in einer inerten Flüssigkeit, gegebenenfalls unter Zusatz niederer Monoalkohole von 1 bis 5 Kohlenstoffatomen, hergestellt wird.

6. Verfahren nach den Ansprüchen 1 bis 5, dadurch gekennzeichnet, daß die gesamte Umsetzung und Prozeßführung
in einer inerten Flüssigkeit vorgenommen wird.

/.

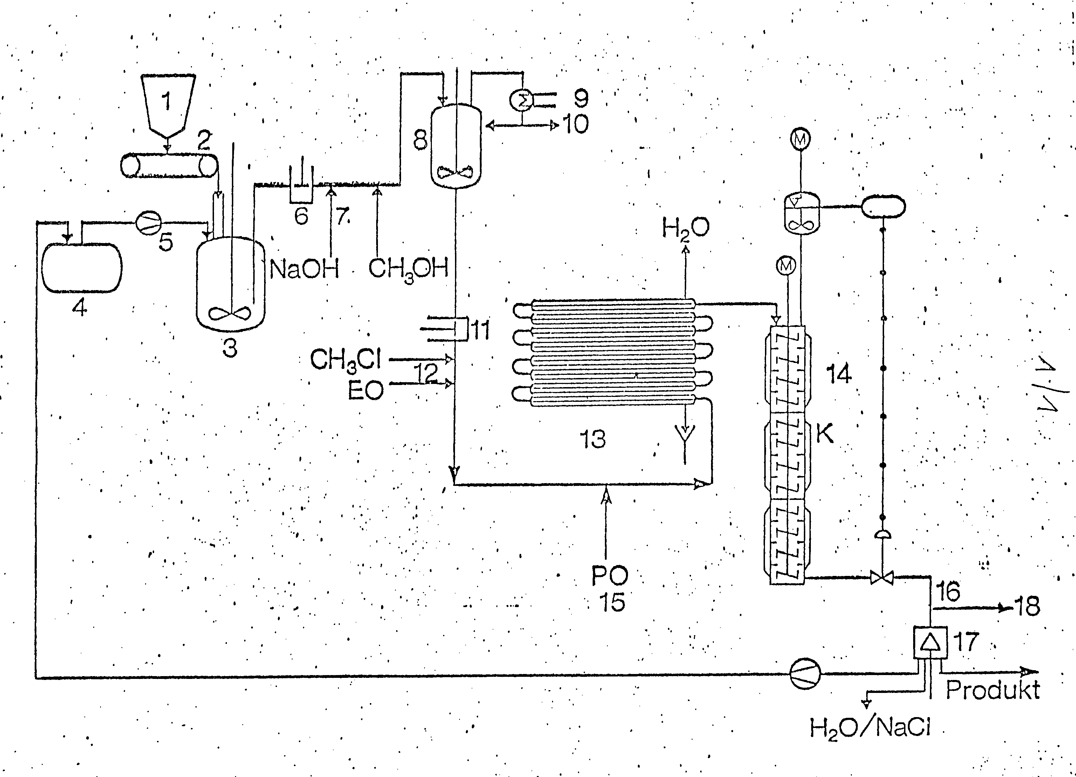

NaOH CH$_3$OH

H$_2$O

CH$_3$Cl

EO

PO
15

K

Produkt

H$_2$O/NaCl

0035653
HENKEL KGaA
ZR-FE/Patente